# EUROPEAN PATENT SPECIFICATION

(11) **EP 1 375 247 B1**
(45) Date of publication and mention of the grant of the patent: **30.03.2005**
(21) Application number: 02014218.8
(22) Date of filing: 26.06.2002
(51) Int. Cl.: B60N 3/10

(54) **A device for keeping items in a vehicle in position**
Vorrichtung zur Verriegelung von Gegenständen in einem Fahrzeug
Dispositif de maintien en position d'objets dans un véhicule

(43) Date of publication of application: 02.01.2004
(73) Proprietor: Ford Global Technologies, LLC, Dearborn, MI 48126 (US)
(72) Inventor: Dahl, Thomas, 443 32 Lerum (SE); Levy, Todd, Thousand Oaks, California 91320 (US)
(74) Representative: Lindberg, Klas Valter Bo

(56) References cited:
- EP-A- 0 748 717
- DE-A- 19 959 991
- DE-C- 19 519 602
- FR-A- 2 804 641
- US-A- 5 087 008
- US-A- 5 259 579
- US-A- 5 685 592
- US-A1- 2002 050 501

## Description

### Field of the invention

The present invention relates to a device for keeping items in a vehicle in position, comprising at least one recess for receiving said items, whereby the device is movable between a first position, wherein the recess is accessible for receiving said items, and a second position wherein the recess is hidden and inaccessible for receiving said items.

### Background of the invention

Several devices of the above mentioned type are known. Cup and can holders are most common and usually installed in the front panel or the bracket between the front seats of most new vehicles. However, for larger containers, such as bottles with a volume of, for example, 1 to 2 liters, these holders are insufficient.

Effort has been made to make a holder for larger containers and has resulted in a plastic disk with a recess, the recess having a diameter larger than the diameter of the container. The plastic disk is arranged between the back seat and the bracket between the two front seats of a vehicle and at a distance from the vehicle floor. The container is simply put into the recess of the plastic disk keeping the balance of the bottle and through the recess until the container rests on the floor of the vehicle. However, the disk is easily brought out of position, for example by a leg of someone sitting in the backseat, and is not easily put back into position. Further, the result is in most cases the container tipping over.

DE 195 19 602 C (Daimler Benz AG) discloses an armrest for a vehicle seat having a drinking-vessel holder arranged at its front end and has a support surface for a drinking vessel and spring-loaded retaining bracket for clamping the drinking vessel. A plastics insert is embedded in the armrest contour and has a base, which forms the support surface for the drinking vessel, and an arcuate rear wall. The retaining bracket is mounted such that it can be pivoted about a pivot axis which is provided at the front end of the base. When there is no drinking vessel, the bracket swings, under spring prestressing, against the rear wall.

### Summary of the invention

In view of the issues in the related art as set forth above, one of the objects of the present invention is to provide an improved device for keeping various items, especially liquid containers, in position in vehicles.

This object is achieved by a device according to claim 1 of the present invention.

According to the present invention, said device comprises at least one recess for receiving said items , whereby the device is movable between a first position, wherein the recess is accessible for receiving said items, and a second position wherein the recess is hidden and inaccessible for receiving said items. A spring forces the device from the first position to the second position. The device comprises a fabric with a recess. Instead of a fabric, a spring band steel can be used. With the term "fabric" is intended for example a weave, net, band, belt, cord or strap made of some plastic or textile. It is also possible to use a flexible fabric. In case the device comprises a fabric, if the device according to the present invention is unintentionally, or intentionally, pushed or hit the device will briefly be bent out of shape but immediately return to its original shape. Thus, re-positioning of the device is automatic with the present invention. This is made possible due to the spring force applied in a direction from said first position to said second position of the device. Hereinafter, the term "fabric" is used and is intended to mean fabric or steel band spring.

The recess is a through hole in the fabric. When in said second position, the fabric is essentially rolled up and thus the through hole is inaccessible. Since the spring force is in the direction from said first position to said second position, the fabric being in a retracted position is equivalent to being in said second position. The spring force can be applied by a spring in a retractor roller. Another possibility is that the spring can be the fabric itself, for instance, a spring band steel or an elastic fabric. When the device is to be used, the fabric is pulled out and thus the through hole in the fabric is made accessible.

The shape of the recess is preferably circular since most liquid containers have circular cross-sections, but other polygon shapes are possible, such as a square in order to hold, for example, a tetrahedral package with orange juice.

According to one aspect of the present invention, since the containers might be shaped in several ways, the recess is provided with a flexible material for better grip on the item being held in position with the holder. This will make it possible for a holder with a circular recess to hold an item with for example a square cross-section. Conversely, the holder can have a square recess and still hold an item with circular cross-section.

According to another aspect of the present invention, a fastening device is utilized to prevent the fabric from being pulled back into the retracted position. Preferably, the fastening device is a thin elongate pin arranged in the plane of the fabric and perpendicular to the extraction direction of the fabric. When the holder is to be used the fabric is pulled out from the retracted position and the pin is secured in said first position with hooks arranged in the front of the back seat, the hooks gripping the ends of the pin.

Further, according to another aspect of the present invention, the fabric comprises a recess by the coupling device for facilitating the gripping of the fastening device. Preferably, the recess is large enough to allow for at least one or two fingers of a user, pulling the fabric out, in the recess. Thus, when pulling the fabric out, the pin is pulled and put behind the hooks at the back seat.

According to yet another aspect of the present invention, a recess is formed in the floor of the vehicle, and when the holder is in use, under the recess of the fabric for further stability of the item kept in the holder.

### Brief description of the drawings

The invention is further explained below with reference to the drawings, wherein:
Figure 1a is a perspective view of a part of the interior of a vehicle showing an embodiment of the holder according to the present invention in retracted position;
Figure 1b is a perspective view of a part of the interior of a vehicle showing the holder from figure 1a in use holding a bottle;
Figure 1c is a perspective view of a part of the interior of a vehicle showing an alternative embodiment of the holder according to the present invention in use holding a bottle;
Figure 1d is a perspective view of a part of the interior of a vehicle showing the holder from figure 1c in use holding a tetrahedral package;
Figure 2a is a cross-sectional view of the holder from figure 1a in retracted position;
Figure 2b is a cross-sectional view of the holder from figure 1b in use holding a bottle;
Figure 3a is a top view of one embodiment of the fabric showing the end with the fastening device;
Figure 3b is a top view of an alternative embodiment of the fabric showing the end with the fastening device.

### Description of preferred embodiments

Hereinafter, embodiments of the present invention will be explained in detail with reference to the accompanying drawings.

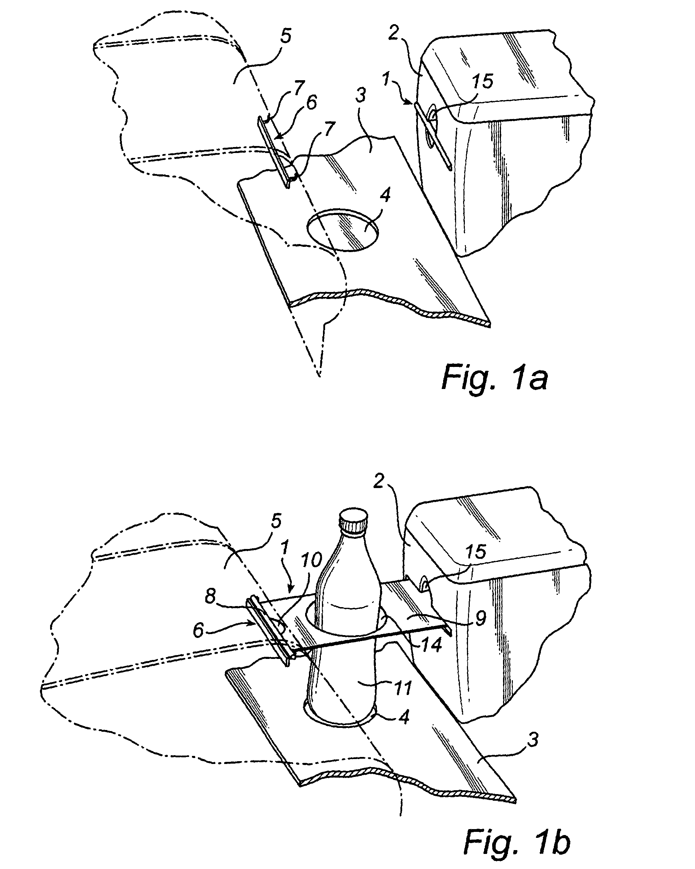

Figures 1a and 1b show an embodiment of the present invention where the holder 1 is arranged in a vehicle such that it is intended to be mounted between the bracket 2, the bracket 2 between the two front seats, and the back seat 5 of a vehicle. At the back seat 5 is arranged a device 6 with hooks 7 corresponding to the fastening device 8, henceforth referred to as "pin". When the holder 1 is in use the recess 14 in the fabric 9 is located straight above the recess 4 in the floor 3 of the vehicle. Figure 1b shows the holder 1 holding a bottle 11. The recess 14 in the fabric 9 is in this embodiment circular, but it is possible to have other shapes of the recess 14. Preferably an additional recess 10 is arranged in the fabric 9 adjacent to the pin 8. The main purpose of this recess 10 is to facilitate mounting the holder, i.e. to make it easier gripping the pin 8 when pulling the fabric 9 out from the retractor roller. Preferably a corresponding recess 15 is arranged in the bracket 2 to further facilitate gripping the pin 8 and consequently the fabric 9.

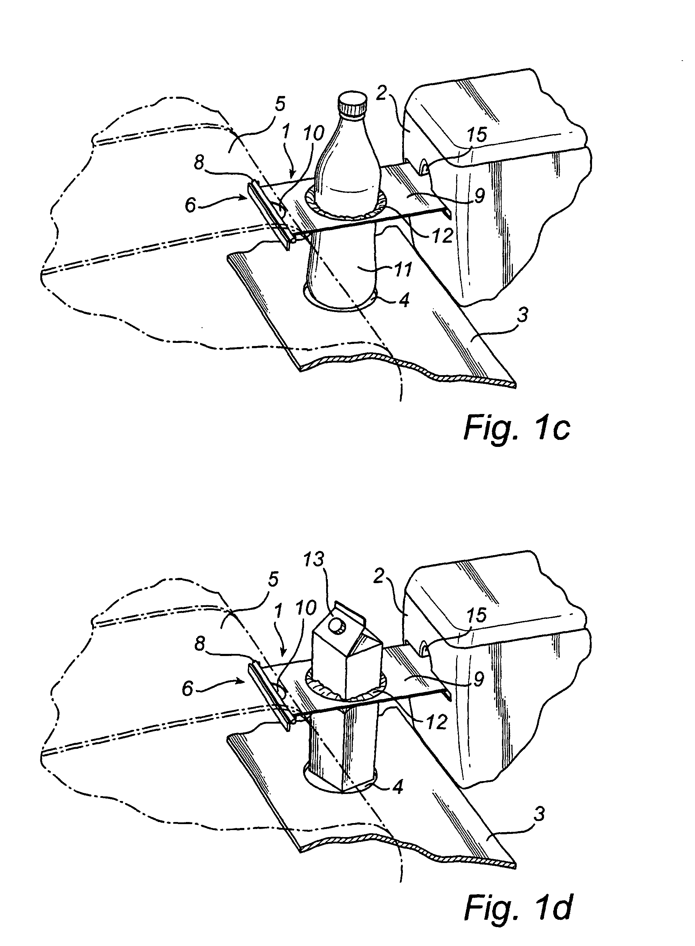

Figures 1c and 1d show an alternative embodiment of the present invention where the recess 14 of figures 1a and 1b is provided with a flexible material 12 in order to hold an item 11, 13 more firmly in place. In figure 1d the holder 1 is holding a tetrahedral package 13 even though the recess of the fabric 9 is circular. One alternative is of course to have a square recess in the fabric 9 provided with flexible material in order to be able to hold items with any kind of cross-section. The recess in the fabric 9 can further be of any shape.

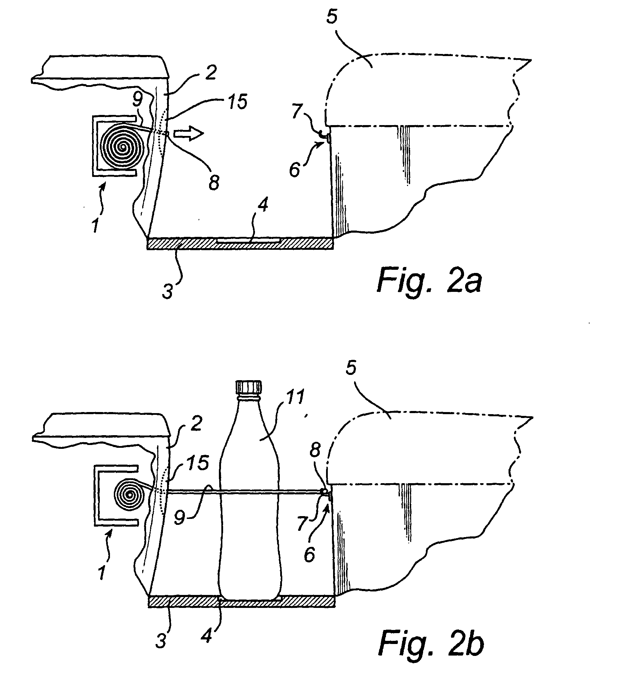

The length of the fabric 9 is preferably longer than the distance between the back seat 5 and the bracket. Figures 2a and 2b show the holder 1 from the side in a cross-sectional view in retracted and extracted position, respectively. When the holder 1 is in use, see figure 2b, enough fabric 9 is preferably still left on the roller in order to allow pulling out at least a few centimeters more of fabric. This is to ensure that not to much load is applied on the device 6 and the retractor roller in case the fabric is, for example, stepped on or pulled in some other way. Preferably, the fabric 9 is long enough to be pulled out all the way along down to the floor 3 of the vehicle, along the floor 3 and up from the floor 3 to the device 6.

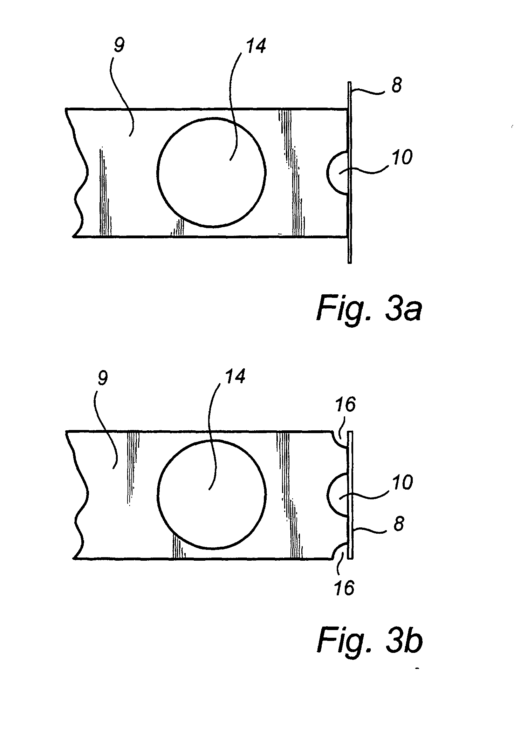

Figures 3a and 3b show two further alternative embodiments of the holder 1 and more specifically the length of the pin 8. Figure 3a shows an embodiment where the length of the pin 8 is greater than the width of the fabric 9. The hooks 7 of the device 6 are in this case correspondingly spaced from each other to grip the pin 8 at the ends outside the fabric 9. In figure 3b the length of the pin 8 is essentially the same as the width of the fabric 9. In this case recesses 16 are arranged in the fabric 9 at the ends of the pin 8 to enable the hooks 7 of the device 6 to grip the pin 8.

The foregoing is a disclosure of preferred embodiments for practicing the present invention. However, it is apparent that device incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within its true spirit and scope.

By way of example, the fastening device can be varied using, for example, a hook-and-loop fastener or a magnet coupling. Further, the holder according to the present invention could also be used to hold items in the luggage compartment of a vehicle. A holder with several recesses in the fabric is also a possible option, especially where the fabric can be stretched over a longer distance than between the backseat and the middle bracket of a vehicle, such as in a luggage compartment.

## Claims

1. A device (1) for keeping items (11) in a vehicle in position, comprising at least one recess (14) for receiving said items (11), whereby the device (1) is movable between a first position, wherein the recess (14) is accessible for receiving said items (11), and a second position wherein the recess is hidden and inaccessible for receiving said items (11), a spring forces the device (1) from the first position to the second position,
**characterized in**
**that** the device (1) is essentially rolled up in said second position.

2. A device (1) according to claim 1, wherein said spring is a spring loaded retractor roller.

3. A device (1) according to claim 1, wherein said spring is a spring band steel, comprising said recess (14).

4. A device (1) according to one of the preceding claims, wherein the recess (14) is provided with flexible material (12) for better grip on the items being held in position with the device (1).

5. A device (1) according to one of the preceding claims, wherein the device (1) comprises a fastening device (8).

6. A device (1) according to claim 5, wherein the fastening device (8) is a thin elongate pin (8) arranged in the plane of the device (1).

7. A device (1) according to claim 5 or 6, wherein the device (1) comprises a recess (10) by the fastening device (8) for facilitating the gripping of the fastening device (8).

## Patentansprüche

1. Vorrichtung (1) zur Halterung von Gegenständen (11) in ihrer Position in einem Fahrzeug, umfassend mindestens eine Ausnehmung (14) zur Aufnahme dieser Gegenstände (11), wobei die Vorrichtung (1) zwischen einer ersten Position, in der die Ausnehmung (14) für die Aufnahme der Gegenstände (11) zugänglich ist, und einer zweiten Position, in der die Ausnehmung verborgen und für die Aufnahme der Gegenstände (11) unzugänglich ist, beweglich ist, wobei eine Feder die Vorrichtung (1) von der ersten in die zweite Position zwingt,
**dadurch gekennzeichnet,**
**dass** die Vorrichtung (1) in der zweiten Position im Wesentlichen aufgerollt ist.

2. Vorrichtung (1) nach Anspruch 1, wobei die Feder ein federbelasteter Aufroller ist.

3. Vorrichtung (1) nach Anspruch 1, wobei die Feder ein die Ausnehmung (14) aufweisendes Federstahlband ist.

4. Vorrichtung (1) nach einem der vorangegangenen Ansprüche, wobei die Ausnehmung (14) mit flexiblem Material (12) versehen ist, so dass die in ihrer Position durch die Vorrichtung (1) gehaltenen Gegenstände besser festgehalten werden können.

5. Vorrichtung (1) nach einem der vorangegangenen Ansprüche, wobei die Vorrichtung (1) eine Befestigungsvorrichtung (8) aufweist.

6. Vorrichtung (1) nach Anspruch 5, wobei die Befestigungsvorrichtung (8) ein in der Ebene der Vorrichtung (1) angeordneter dünner länglicher Stift (8) ist.

7. Vorrichtung (1) nach Anspruch 5 oder 6, wobei, um die Befestigungsvorrichtung (8) leichter greifen zu können, die Vorrichtung (1) eine Ausnehmung (10) an der Befestigungsvorrichtung (8) aufweist.

## Revendications

1. Dispositif (1) pour maintenir en position des objets (11) dans un véhicule, comportant au moins un évidement (14) pour recevoir lesdits objets (11), le dispositif (1) étant mobile entre une première position dans laquelle l'évidement (14) est accessible et peut recevoir lesdits objets (11) et une deuxième position dans laquelle l'évidement est caché et inaccessible et ne peut pas recevoir les objets (11), un ressort sollicitant le dispositif (1) depuis la première position vers la deuxième position,
**caractérisé en ce**
**que** dans la deuxième position le dispositif (1) est sensiblement enroulé.

2. Dispositif (1) selon la revendication 1, dans lequel ledit ressort est un rouleau enrouleur sollicité par un ressort.

3. Dispositif (1) selon la revendication 1, dans lequel le ressort est un ressort feuillard d'acier comportant ledit évidement (14).

4. Dispositif (1) selon l'une quelconque des revendications précédentes, dans lequel l'évidement (14) est pourvu d'un matériau flexible (12) permettant une meilleure prise sur les objets maintenus en position par le dispositif (1).

5. Dispositif (1) selon l'une quelconque des revendications précédentes, dans lequel le dispositif (1) comporte un dispositif de fixation (8).

6. Dispositif (1) selon la revendication 5, dans lequel le dispositif de fixation (8) est une tige (8) fine allongée disposée dans le plan du dispositif (1).

7. Dispositif (1) selon la revendication 5 ou 6, dans lequel le dispositif (1) comporte, près du dispositif de fixation (8), un évidement (10) pour faciliter la préhension du dispositif de fixation (8).
